# EUROPÄISCHE PATENTSCHRIFT

(11) **EP 4 505 561 B1**
(45) Veröffentlichungstag und Bekanntmachung des Hinweises auf die Patenterteilung: **20.08.2025**
(21) Anmeldenummer: 23716525.3
(22) Anmeldetag: 03.04.2023
(51) Int. Cl.: H02G 3/04, H02G 3/06

(54) **KABELTRAGSEGMENT**
CABLE SUPPORT SEGMENT
SEGMENT DE SUPPORT DE CÂBLE

(30) Priorität: 14.04.2022 DE 202022102035 U
(43) Veröffentlichungstag der Anmeldung: 12.02.2025
(73) Patentinhaber: OBO Bettermann Produktion Deutschland GmbH & Co.KG, 58710 Menden (DE)
(72) Erfinder: GROSSE GEHLING, Andreas, 58710 Menden (DE)
(74) Vertreter: Haverkamp Patentanwälte PartG mbB
(86) Internationale Anmeldenummer: PCT/EP2023/058603
(87) Internationale Veröffentlichungsnummer: WO 2023/198485

(56) Entgegenhaltungen:
- WO-A1-89/02179
- WO-A1-90/13164
- DE-U1- 202014 101 758
- ES-A1- 2 363 320
- US-A- 4 802 643
- US-A- 5 465 929
- US-A1- 2020 021 092

## Beschreibung

Die Erfindung betrifft ein Kabeltragsegment mit zwei ein Kabelaufnahmevolumen seitlich einfassenden, jeweils eine obere und eine untere, aus der Ebene einer Holmseitenwand ausgestellte Struktur aufweisenden Tragholmen und mit zumindest einem die Tragholme miteinander verbindenden Bodenelement, wobei die Verbindungsabschnitte von zwei Kabeltragsegmenten mit einem Überlapp miteinander in Eingriff stellbar sind und wobei der Abstand der Holmseitenwände voneinander in den beiden Verbindungsabschnitte gleich ist.

Kabeltragsegmente sind die einzelnen Bestandteile, aus denen beispielsweise ein Kabelleiter- oder ein Kabelrinnensystem als Kabeltrag- bzw. Kabelführungssystem zusammengesetzt ist. Bei derartigen Kabeltragsegmenten kann es sich beispielsweise um gerade Stücke unterschiedlicher Länge, Bögen, Winkelstücke, Kreuzstücke und dergleichen handeln. Derartige Kabeltragsegmente umfassen zwei mit Abstand zueinander angeordnete Tragholme. Diese sind durch zumindest ein Bodenelement miteinander verbunden. Die Tragholme begrenzen seitlich das Kabelaufnahmevolumen des Kabeltragsegmentes ein. Als Bodenelement können ein Bodenblech oder Sprossen dienen. Das Bodenblech kann einstückig mit den Tragholmen aus einer Platine geformt sein. Alternativ besteht auch die Möglichkeit, anstelle von Sprossen ein Bodenblech zur Verbindung der Tragholme einzusetzen. Die Tragholme sind nach Art eines Trägers ausgeführt und mit einer im unteren und im oberen Bereich der Seitenwand ausgestellten Struktur ausgestattet. Eine solche Struktur ist beispielsweise ein in Richtung des Kabelaufnahmevolumens abgekanteter Schenkel. Ein solcher unterseitig an die Holmseitenwand angeschlossener Schenkel dient vielfach zur Auflage des zumindest einen Bodenelements, also beispielsweise eines Bodenbleches oder der Sprossen, welches zumindest eine Bodenelement an diesem befestigt ist. Die obere Struktur kann ebenfalls durch einen solchen Schenkel bereitgestellt sein. In anderen Ausgestaltungen ist die obere Struktur als rundes Auge bzw. gerollte Kante ausgeführt.

Handelt es sich bei dem Kabeltragsystem um ein Kabelleitersystem sind die in einem solchen Kabelleitersystem zu verlegenden Kabel an die Sprossen der einzelnen Kabelsegmente unter Verwendung von Kabelbefestigern, wie beispielsweise Klemmen angeschlossen. Handelt es sich bei dem Kabeltragsystem um ein Kabelrinnensystem, liegen die Kabel auf dem Bodenelement auf.

Zur Ausbildung eines herkömmlichen Kabeltragsystems aus mehreren Kabeltragsegmenten müssen zwei aneinandergrenzende Kabeltragsegmente stirnseitig miteinander verbunden werden. Gemäß einer ersten Möglichkeit, zwei Kabeltragsegmente miteinander zu verbinden, werden Kabeltragsegmentverbinder verwendet. Ein solcher Verbinder wird je nach Ausgestaltung der Kabeltragsegmente innenseitig oder außenseitig an zwei miteinander zu verbindende Kabeltragsegmente angeschlossen. Dieser überlappt mit einem ersten Abschnitt mit einem Tragholm des einen Kabeltragsegments und mit einem weiteren Abschnitt mit dem fluchtend zu diesem Tragholm des ersten Kabeltragsegments angeordneten Tragholm des zweiten Kabeltragsegments. Zwei derartige miteinander verbundene Kabeltragsegmente sind auf Stoß der endseitigen Schmalseiten der Tragholme miteinander verbunden. Angeschlossen werden die Verbinder an die Tragholme mittels Schraubbefestigern. Dabei ist Sorge dafür zu tragen, dass die Verbindung zweier Kabeltragsegmente der aufzunehmenden Last Stand hält. Typischerweise wird ein solcher Verbinder mit mehreren Schraubbefestigern an jeden Tragholm angeschlossen. Entsprechend lang muss ein solcher Verbinder parallel zu den Holmseitenwänden jedes der beiden miteinander zu verbindenden Kabeltragsegmente vorgesehen sein. Typischerweise werden Kabelleitersegmente auf diese Weise miteinander verbunden.

Bei anderen Ausgestaltungen, wie beispielsweise in WO 2015/069127 A1 beschrieben, wird das von einer Verbindung von Kabelrinnen her bekannte Konzept für Kabelleiter aufgenommen, indem die Tragholme eines solchen Kabelleitersegmentes an einem Ende nach außen hin verkröpft ausgebildet sind. Auf diese Weise ist ein bezüglich seiner Querschnittsfläche größerer Verbindungsabschnitt bereitgestellt, damit zwei miteinander zu verbindende Kabelleiter oder Kabelrinnen überlappend in ihren Verbindungsabschnitten aneinander befestigt werden können. Bei den aus dem vorstehend beschriebenen Stand der Technik bekannten Kabelleitersegmenten stellt diese Verkröpfung den Verbindungsabschnitt der Tragholme dar. Durch die Verkröpfung ist der Abstand der Holmseitenwände voneinander gegenüber den angrenzenden Teilen des Kabelleitersegments vergrößert, damit das unverkröpfte Ende eines zweiten Kabelleitersegmentes in diesen aufgeweiteten Verbindungsabschnitt eingeschoben werden kann. Bei den in diesem Dokument beschriebenen Kabelleitersegmenten kann zur Verbindung zweier Kabelleitersegmente zwar auf zusätzliche Kabelleiterverbinder verzichtet werden. Jedoch müssen die Kabelleitersegmente in Bezug auf ihre endseitigen Verbindungsabschnitte unterschiedlich ausgebildet sein. Ein Ablängen beispielsweise eines gerade ausgeführten Kabelrinnensegmentes ist daher nur von einer Seite her möglich. Wenn ein Reststück mit einem verkröpften Verbindungsabschnitt weiterverwendet werden soll, werden zusätzlich Holmverbinder verwendet. In einer anderen vorbekannten Ausgestaltung sind die Kabelleiter bezgl. der Auslegung der Verbindungsabschnitte der beiden parallelen Tragholme ungleich. Einer der beiden Verbindungsabschnitte eines Endes jedes Tragholms eines solchen Kabelleitersegmentes ist nach Art einer Muffe mit einer reduzierten Größe ausgeführt, damit dieses mit dem Tragholm eines damit zu verbindenden Kabelleitersegmentes in Eingriff gestellt werden kann. Bei dem anderen Tragholm dieses Kabelleitersegmentes ist das gegenüberliegende Ende als Verbindungsabschnitt in dieser Form ausgeführt. Ein Ablängen einer solchen Kabelleiter führt zu einem Verlust der Verbindungsmöglichkeit zweier Kabelrinnensegmente, ohne zusätzliche Verbinder einsetzten zu müssen.

Ein Kabeltragsegment gemäß dem Oberbegriff des Anspruchs 1 ist aus ES 2 363 320 A1 bekannt. Jeder Tragholm dieses vorbekannten Tragsegmentes hat an seinen beiden Enden unterschiedlich ausgelegte Verbindungsabschnitte. Während der eine Tragholm an seinem einen Ende einen bezüglich seiner Höhe reduzierten Verbindungsabschnitt aufweist, ist das andere Ende ausgelegt, damit der bezüglich seiner Höhe reduzierte Verbindungsabschnitt eines anderen Kabeltragsegmentes in dieses einpasst. Damit ist dieses vorbekannte Kabeltragsegment hinsichtlich seiner Verbindungsabschnitte prinzipiell ausgebildet, wie das aus WO 2015/069127 A1 bekannte

Ausgehend von dem vorstehend beschriebenen Stand der Technik liegt der Erfindung daher die Aufgabe zu Grunde, ein Kabeltragsegment vorzuschlagen, welches grundsätzlich ohne Einsatz zusätzlicher Verbinder mit einem zweiten Kabeltragsegment verbunden und beliebig abgelängt werden kann.,

Gelöst wird diese Aufgabe erfindungsgemäß durch ein eingangs genanntes, gattungsgemäßes Kabeltragsegment mit den Merkmalen des Anspruchs 1.

Bei diesem Kabeltragsegment ist die Auslegung der beiden Tragholme in ihren beiden endseitigen Verbindungsabschnitten unterschiedlich. Die unterschiedliche Auslegung der beiden Tragholme kann ihre Dimensionierung (ihre Bemaßung) und/oder auch ihre Formgebung betreffen. Von Bedeutung ist, dass jeder Tragholm an seinen beiden Enden jeweils einen gleich ausgelegten Verbindungsabschnitt aufweist, jedoch die beiden Tragholme hinsichtlich der Auslegung ihrer Verbindungsabschnitte unterschiedlich sind. Die Unterschiedlichkeit in der Auslegung der Verbindungsabschnitte des einen Tragholms gegenüber dem anderen ist dergestalt vorgesehen, dass der Verbindungsabschnitt des einen Tragholms, und zwar derjenige, der im Rahmen dieser Ausführungen die auch als angepasst bezeichnete Auslegung aufweist, in den Verbindungsabschnitt des anderen Tragholms einpasst, mithin in diesen eingesetzt werden kann. Bei einem Tragholm mit einer oberen und einer unteren, aus der Holmseitenwand ausgestellten Struktur kann die angepasste Auslegung durch eine geringere Höhe dieses Tragholms in seinen Verbindungsabschnitten bereitgestellt sein. Die unterschiedliche Auslegung der Verbindungsabschnitte der beiden Holme bedeutet nicht, dass die Querschnittsfläche der Verbindungsabschnitte der Tragholme unterschiedlich sein muss. Wesentlich ist, dass die unterschiedliche Auslegung ein Ineinanderlaufenlassen bzw. ein Ineinandereinstecken bzw. -einführen dieser Tragholmabschnitte erlaubt. Die Auslegung der angepassten Auslegung ist vorzugsweise so ausgeführt, dass der Tragholm mit der angepassten Auslegung spielfrei oder quasi spielfrei also: nur mit möglichst geringem verbleibendem Spiel in diejenige des anderen Tragholms einpasst. Sind in Richtung zum Kabelaufnahmevolumen abragende Strukturen bei beiden Kabeltragsegmenten vorgesehen, betrifft die unterschiedliche Auslegung typischerweise die Dimensionierung der Höhe der Tragholme. Sind die Tragholme beispielsweise U-förmig ausgeführt, wobei die Schenkel zueinander weisen, kann als unterschiedliche Auslegung ausschließlich auf die unterschiedliche Höhe der Tragholme abgestellt werden. Die Schenkelhöhe kann bei beiden Tragholmen bei einer solchen Auslegung gleich sein. Sind geometrische Strukturen an die Holmseitenwände angeformt, wie etwa runde Augen, ist dieses bei der unterschiedlichen Auslegung der Verbindungsabschnitte zu berücksichtigen. Die unterschiedliche Auslegung kann auch dergestalt ausgeführt sein, dass zwei miteinander in ihren zueinander weisenden Verbindungsabschnitten zusammengesetzte Kabeltragsegmente mit einem gewissen Reibschluss verbunden sind.

Typischerweise wird man die Querschnittsform bei den beiden Tragholmen eines Kabeltragsegmentes gleich ausbilden. Möglich ist es auch, dass die Querschnittsform bei den beiden Tragholmen eines Kabeltragsegmentes unterschiedlich ist, beispielsweise dass ein Tragholm eine C-förmige Profilierung und der andere Tragholm eine Z- bzw. S-förmige Profilierung aufweist.

In jedem Verbindungsabschnitt hat der eine Tragholm gemäß einem bevorzugten Ausführungsbeispiel eine geringere Dimensionierung und der andere eine größere Dimensionierung. Der Abstand der Tragholme zwischen ihren Holmseitenwänden ist in beiden endseitigen Verbindungsabschnitten gleich. Ein sich von dem übrigen Verlauf der Tragholme über ihre Längserstreckung unterscheidende Querschnittsauslegung in den Verbindungsabschnitten ist nicht erforderlich. Vielmehr sind die Tragholme über die Längserstreckung des Kabeltragsegmentes mit einer gleichbleibenden Querschnittsgeometrie und -auslegung ausgeführt. Entsprechend gering ist der Herstellungsaufwand eines solchen Kabeltragsegmentes. Zum Anschließen eines ersten Kabeltragsegmentes an ein zweites Kabeltragsegment ist es lediglich erforderlich, dass an den Tragholm des ersten Kabeltragsegmentes mit der ersten, bzw. sich nicht unterscheidenden Auslegung der Tragholm mit der zweiten Auslegung des zweiten Kabeltragsegmentes herangeführt wird, der die unterschiedliche, bzw. sich unterscheidende Auslegung aufweist. Wenn beim Zusammensetzen zweier Kabeltragsegmente gleich ausgelegte Tragholme stirnseitig aneinandergrenzen sollten, kann eine korrekte Positionierung eines zweiten, an ein erstes Kabeltragsegment anzuschließendes Kabeltragsegment durch einfaches Wenden in der Ebene seines Bodenelementes in die erforderliche Orientierung bzw. Positionierung gebracht werden. Dieses erleichtert nicht nur die Verbindung zweier miteinander zu befestigender Kabeltragsegmente aneinander. Von Besonderheit ist zudem, dass ein solches Kabeltragsegment von jedem Ende aus abgelängt werden kann, und dennoch dieses Kabeltragsegment mit seinen beiden Endabschnitten - den Verbindungsabschnitten - an ein weiteres gleichartiges Kabeltragsegment problemlos angeschlossen werden kann.

Die Verbindung von zwei Kabeltragsegmenten erfolgt durch die Ineingriffstellung jeweils eines Tragholms mit der angepassten Auslegung eines ersten Kabeltragsegmentes in den Tragholm der anderen Auslegung des anderen Kabeltragsegmentes mit einem Überlapp der miteinander in Eingriff gestellten Verbindungsabschnitte der beiden Kabeltragsegmente. Das Maß des Überlapps der Verbindungsabschnitte der beiden Kabeltragsegmente ist variabel und kann an die jeweilige Montagesituation angepasst werden. Bei einem Kabelleitersegment wird die maximale Überlappweite beispielsweise durch den Abstand der ersten, von dem Ende eines Kabeltragsegmentes angeordneten Sprosse bestimmt. Bei einem Kabelrinnensegment mit Bodenblech ist dieses dergestalt ausgelegt, dass der Verbindungsabschnitt eines weiteren Kabelrinnensegmentes mit dem gewünschten Überlapp mit diesem Verbindungsabschnitt in Eingriff gestellt werden kann. Ein solches Bodenblech erstreckt sich beispielsweise nur über einen Teil des Abstandes der beiden Tragholme voneinander, kann jedoch auch geschlitzt oder anderweitig ausgebildet sein. Sollte das Bodenelement als Bodenblech einstückig mit den Tragholmen hergestellt oder bereits an die Tragholme angeschlossen sein, wird dieses im Bereich eines Verbindungsabschnittes ganz oder teilweise entfernt oder entsprechend zugeschnitten.

Ein solches Kabeltragsegment ist bezüglich der Auslegung seiner endseitigen Verbindungsabschnitte somit spiegelsymmetrisch zu einer quer zur Längserstreckung des Kabeltragsegmentes angeordneten Ebene ausgeführt. Handelt es sich bei der angepassten Auslegung des einen Tragholms um eine unterschiedliche Dimensionierung, ist durch die Überlappanordnung der mit seiner angepassten Dimensionierung jeweils sich bezüglich zumindest einer Dimensionierungsgröße kleinere und damit unterschiedliche Tragholm in dem bezüglich seiner Dimensionierung anderen Tragholm des anderen Kabeltragsegmentes aufgenommen. Bei einer Ausgestaltung, bei der die von der Ebene der Holmseitenwand ausgestellten Strukturen der beiden Tragholme zueinander weisen, ist der mit einer größeren bzw. nicht angepassten Dimensionierung in seinen Verbindungsabschnitten ausgelegte Tragholm jeweils der außenseitig angeordnete. Sind diese Strukturen der beiden Tragholme voneinander wegweisend vorgesehen, befindet sich der mit der angepassten Dimensionierung ausgelegte Tragholm jeweils außenseitig. Derartige von der Holmseitenwand ausgestellte Strukturen können auch in Form von seitlich offenen Kanälen ausgeführt sein. Durch die Tragholme verstärkenden oberen und unteren Strukturen ist der in der Auslegung angepasste Tragholm nach Art eines Auszugsegmentes in dem bezüglich der anderen Auslegung nicht angepassten Tragholm gehalten. Eine Traglastübertagung erfolgt somit über den in Richtung der Höhe der Holmseitenwand wirkenden Formschluss zwischen den beiden Kabeltragsegmenten mit ihren oberen und unteren von der jeweiligen Holmseitenwand in Richtung zu dem Kabelaufnahmevolumen abragenden Strukturen. Sind diese mit ihren Verbindungsabschnitten in der vorbeschriebenen Weise miteinander in Eingriff gestellt, werden diese typischerweise mit ein oder mehreren Sicherungselementen aneinander befestigt, durch die ein Lösen der Verbindung verhindert ist. Eingesetzt werden können hierfür beispielsweise Federelemente, beispielsweise Clips, Schrauben oder dergleichen. Da im Vergleich zu einer Kabeltragsegmentverbindung unter Verwendung von Kabeltragsegmentverbindern nur eine einzige überlappende Anordnung vorhanden ist, werden für eine Montage zweier Kabeltragsegmente gemäß der Erfindung entsprechend weniger Befestiger benötigt. Da keine Verbinder und dementsprechend auch nur eine geringere Anzahl von Befestigern benötigt werden, ist das Gewicht von zwei miteinander verbundenen Kabeltragsegmenten reduziert, und zwar ohne Einbußen an die Belastbarkeit der Kabeltragsegmentverbindung hinnehmen zu müssen. Das Gegenteil ist vielmehr der Fall: Da nur eine Überlappanordnung gegeben ist, ist die Biegemomentaufnahme gegenüber Kabeltragsegmentverbindungen unter Verwendung von zusätzlichen Verbindern sogar verbessert. Zudem sind aufgrund einer geringeren Anzahl von Toleranzketten weniger Fertigungstoleranzen in Kauf zu nehmen.

Sind zwei erfindungsgemäße Kabeltragsegmente miteinander verbunden, liegen die Tragholme mit der unterschiedlichen, beispielsweise kleineren Dimensionierung jeweils innenseitig. Die Überlappanordnung der beiden Kabeltragsegmente kann aus diesem Grunde herbeigeführt werden, ohne dass die Breite der beiden miteinander in Eingriff gestellten Verbindungsabschnitte der beiden Kabeltragsegmente unterschiedlich sein müsste. Um diese Ineingriffstellung der Verbindungsabschnitte von zwei miteinander zu verbindenden Kabeltragsegmenten erstellen zu können, ist zumindest einer der beiden Verbindungsabschnitte bodenelementfrei.

Zum erleichterten Kenntlichmachen, welcher der beiden Tragholme eines solchen Kabeltragsegmentes derjenige mit der gegenüber der Auslegung des anderen Tragholms mit der unterschiedlichen Auslegung ist, kann zumindest einer der beiden Tragholme eine entsprechende Markierung aufweisen. Hierbei kann es sich um eine Farbmarkierung, eine Prägung oder dergleichen handeln.

Gemäß einem bevorzugten Ausführungsbeispiel, bei dem von den Holmseitenwänden nach innen gerichtete Strukturen unter- und oberseitig vorgesehen sind, ist die Höhe des Tragholms mit der angepassten Auslegung um die doppelte Materialstärke, zuzüglich zu berücksichtigender Fertigungstoleranzen aus der die Tragholme hergestellt sind, gegenüber der Höhe des anderen Tragholms reduziert. Für den Fall, dass ein solches Kabeltragsegment als obere, gegenüber der Holmseitenwand ausgestellte Struktur ein nach innen und in Richtung zum Kabelaufnahmevolumen ausgestelltes rundes Auge aufweist, betrifft die unterschiedliche Auslegung zusätzlich den Radius des Auges.

Nachfolgend ist die Erfindung anhand eines Ausführungsbeispiels unter Bezugnahme auf die beigefügten Figuren beschrieben. Es zeigen:
- **Fig. 1:**: Eine perspektivische Darstellung eines Kabelleitersegmentes als beispielhaftes Kabeltragsegment,
- **Fig. 2:**: eine Stirnseitenansicht des Kabelleitersegmentes der Figur 1,
- **Fig. 3a-3c:**: einzelne Schritte beim Vorgang des Verbindens zweier Kabelleitersegmente der Figur 1, jeweils in einer Stirnseitenansicht,
- **Fig. 4:**: eine perspektivische Darstellung der beiden miteinander verbundenen Kabelleitersegmente der Figur 3c,
- **Fig. 5:**: eine Stirnseitenansicht zweier weiterer Kabelleitersegmente, die mit jeweils einem Verbindungsabschnitt miteinander in Eingriff gestellt sind,
- **Fig. 6a, 6b:**: in einer Seitenansicht die beiden Kabelleitersegmente der Figur 5 vor dem Ineingriffstellen der beiden Verbindungsabschnitte miteinander (Figur 6a) und nach Ineingriffstellen der Verbindungsabschnitte miteinander (Figur 6b),
- **Fig. 7:**: eine Stirnseitenansicht von zwei miteinander in Eingriff gestellten Kabelleitersegmenten gemäß einem weiteren Ausführungsbeispiel,
- **Fig. 8a:**: zwei miteinander in Eingriff zu stellende Kabelleitersegmente gemäß noch einem Ausführungsbeispiel in einem schematisiert dargestellten ersten Montageschritt,
- **Fig. 8b:**: die Kabelleitersegmente der Figur 7 in einem weiteren Montageschritt zum Verbinden derselben und
- **Fig. 9:**: die beiden miteinander in Eingriff gestellten Kabelleitersegmente der Figuren 8a, 8b.

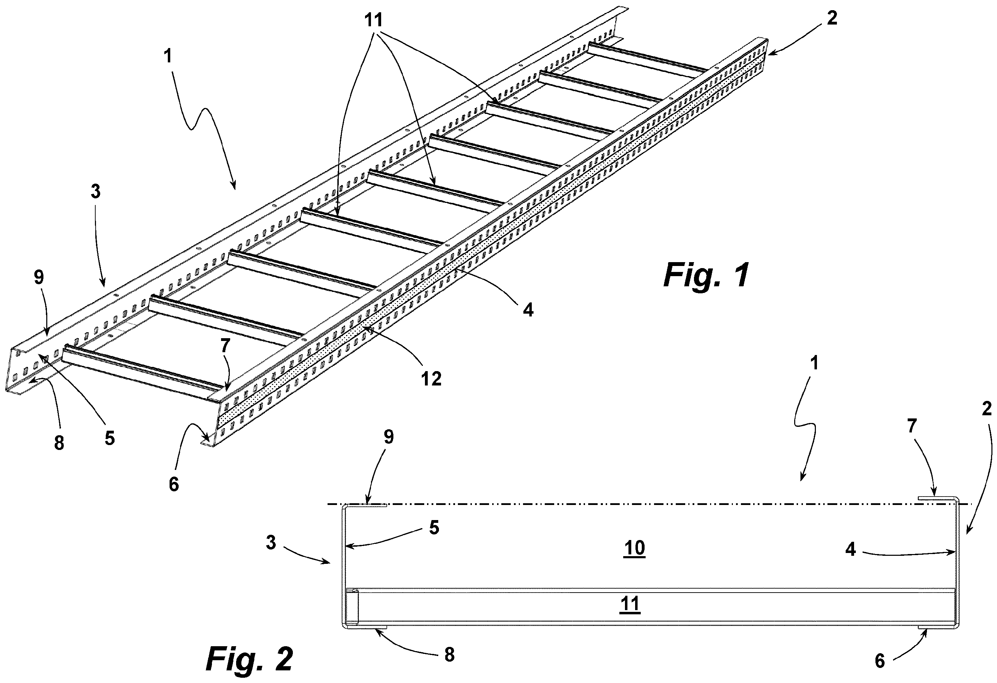

Das in Figur 1 beispielhaft als Kabelleitersegment gezeigte Kabeltragsegment 1 umfasst zwei mit Abstand zueinander angeordnete Tragholme 2, 3. Die Tragholme 2, 3 verfügen jeweils über eine obere und eine untere, aus der Ebene der jeweiligen Holmseitenwand 4 bzw. 5 ausgestellte Struktur, die bei dem dargestellten Ausführungsbeispiel als Schenkel 6, 7 bzw. 8, 9 ausgeführt sind. Die in Richtung zum zwischen dem Tragholm 2, 3 befindlichen Kabelaufnahmevolumen 10 weisenden Schenkel 6, 8 dienen zur Auflage von die Tragholme 2, 3 verbindenden Sprossen 11. Die Sprossen 11 sind in Längserstreckung des Kabeltragsegmentes 1 voneinander beabstandet. Von jedem Ende aus betrachtet ist die jeweils erste Sprosse 11 von den Enden der Tragholme 2, 3 beabstandet. Die Sprossen 11 bilden bei diesem Ausführungsbeispiel das Bodenelement des Kabeltragsegmentes 1.

Von Besonderheit bei dem Kabeltragsegment 1 ist, dass die beiden Tragholme 2, 3 bezüglich ihrer Auslegung unterschiedlich ausgeführt sind. Die unterschiedliche Auslegung beläuft sich bei dem dargestellten Ausführungsbeispiel ausschließlich auf eine unterschiedliche Dimensionierung der Höhe der Tragholme 2, 3. Der Tragholm 2 weist, wie aus der Stirnseitenansicht der Figur 2 erkennbar, eine größere Höhe auf, als der Tragholm 3. Die größere Höhe des Tragholms 2 gegenüber dem Tragholm 3 entspricht der doppelten Materialstärke zuzüglich fertigungsbedingter Toleranzen des Materials, aus dem die Tragholme 2, 3 hergestellt sind. Hergestellt sind die Tragholme 2, 3 aus demselben Material. Bei dem dargestellten Ausführungsbeispiel handelt es sich um verzinktes Stahlblech, mithin um Material, wie dieses üblicherweise für derartige Kabeltragsysteme eingesetzt wird. Die größere Höhe des Tragholms 2 gegenüber dem Tragholm 3 ist in der Figur 2 erkennbar. Der obere Abschluss des Tragholms 3 ist mit strichpunktierter Linie zu dem Tragholm 2 projiziert.

Die vorgeschriebene Auslegung bzw. Dimensionierung der Tragholme 2, 3 erstreckt sich über ihre gesamte Längserstreckung. Damit sind die endseitigen Verbindungsabschnitte gleich ausgeführt, insbesondere mit demselben Abstand der Holmseitenwände 4, 5 zueinander. Die Endabschnitte des Kabeltragsegmentes 1 bilden die Verbindungsabschnitte, in denen zwei derartige Kabeltragsegmente 1, 1.1 miteinander verbunden werden können, und zwar in einer überlappenden Anordnung der Verbindungsabschnitte der beiden Kabeltragsegmente 1, 1.1 miteinander. Eine solche Überlappanordnung der Verbindungsabschnitte ist aufgrund der vorbeschriebenen angepassten Auslegung der Tragholme 2, 3 ohne Weiteres möglich. Zum Verbinden des Kabeltragsegmentes 1 mit einem zweiten Kabeltragsegment 1.1 wird das zweite Kabeltragsegment 1.1 in der Flucht des ersten Kabeltragsegmentes 1 so angeordnet, dass der in seiner Dimensionierung kleinere Tragholm 3.1 dem größer dimensionierten Tragholm 2 des Kabeltragsegmentes 1 und der hinsichtlich seiner Dimensionierung kleinere Tragholm 3 des Kabeltragsegmentes 1 dem hinsichtlich seiner Dimensionierung größeren Tragholm 2.1 des zweiten Kabeltragsegmentes 1.1 zugeordnet wird.

Zum Kennzeichnen des Tragholms 3 mit seiner größeren Dimensionierung ist an diesem an der Außenseite seiner Holmseitenwand 4 eine Farbmarkierung 12 vorgesehen. Bei dem dargestellten Ausführungsbeispiel erstreckt sich die Farbmarkierung 12 über die gesamte Länge der Holmseitenwand 4. Anstelle oder auch ergänzend zu einer Farbmarkierung kann beispielsweise auch eine Prägung vorgesehen sein. Gemäß einem anderen Ausführungsbeispiel ist der in der Ineingriffstellung von zwei Kabeltragsegmenten 1, 1.1 oben liegende Schenkel 9 markiert, beispielsweise mit einer Prägung, bei der es sich durchaus um ein Logo handeln kann. Die Prägung ist vorzugsweise nach außen.

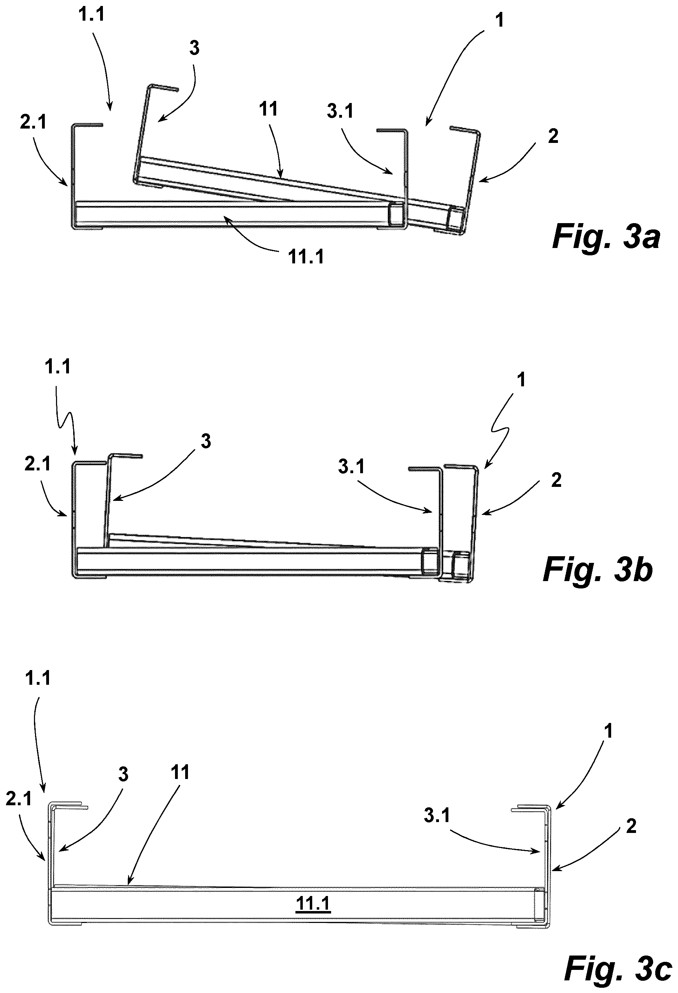

Figur 3a zeigt in einer Stirnseitenansicht das Kabeltragsegment 1 als hinteres Kabeltragsegment und ein zweites Kabeltragsegment 1.1 als vorderes Kabeltragsegment. Das Kabeltragsegment 1.1 ist bezüglich der Orientierung seiner Tragholme 2.1, 3.1 gegenüber der Orientierung der Tragholme 2, 3 des Kabeltragsegmentes 1 getauscht. Während bei dem Kabeltragsegment 1 der größer dimensionierte Tragholm 2 der in der Darstellung rechte ist, ist der größer dimensionierte Tragholm 2.1 des Kabeltragsegmentes 1.1 an der linken Seite angeordnet. Beide Kabeltragsegmente 1, 1.1 sind im Bereich ihres jeweiligen Endabschnittes überlappend zueinander angeordnet. Figur 3a zeigt eine Möglichkeit einer Verbindbarkeit der beiden Kabeltragsegmente 1, 1.1. Das Kabeltragsegment 1 wird mit seinem höheren Tragholm 2 an den Tragholm 3.1 des Kabelleitersystems 1.1 herangeführt, und zwar mit einer Bewegung, dass der Tragholm 3.1 des Kabeltragsegmentes 1.1 in den Tragholm 2 des Kabeltragsegmentes 1 einpasst (s. auch Figur 3b). Das Kabeltragsegment 1 wird anschließend eingeschwenkt und mit seinem bezüglich seiner Höhe geringeren Tragholm 3 in Eingriff gestellt mit dem höheren Tragholm 2.1 des Kabeltragsegmentes 1.1. Der Zusammenbau der beiden Kabeltragsegmente 1, 1.1 ist in Figur 3c erkennbar. Diese Darstellung ist gegenüber den Darstellungen der Figuren 3a, 3b etwas vergrößert. Deutlich zu erkennen ist der spielfreie Eingriff des Tragholms 3.1 des Kabeltragsegmentes 1.1 in den bezüglich seiner Auslegung größeren Tragholm 2 des Kabeltragsegmentes 1. In gleicher Weise steht der bezüglich seiner Auslegung kleinere Tragholm 3 des Kabeltragsegmentes 1 in Eingriff mit dem bezüglich seiner Auslegung größeren Tragholm 2.1 des Kabeltragsegmentes 1.1.

Aufgrund der vorbeschriebenen Auslegung der Kabeltragsegmente 1, 1.1 ist der obere Abschluss der Sprossen 11 des Kabeltragsegmentes 1 bzgl. der Ebene des oberen Abschlusses der Sprossen 11.1 des Kabeltragsegmentes 1.1 um wenige Winkelgrade verstellt. Grund hierfür ist die vorbeschriebene Ineingriffstellung der beiden komplementären Verbindungsabschnitte der beiden Kabeltragsegmente 1, 1.1. Eine solche Neigung ist für die darauf aufzunehmenden Kabel unproblematisch.

Für den Fall, dass eine solche Neigung nicht in Kauf genommen werden soll, können die Sprossen 11, 11.1 entweder an der Anbindung an den bzgl. seiner Auslegung kleineren Tragholm 3 bzw. 3.1 etwas erhöht befestigt werden oder werden an der gegenüberliegenden Seite im Anschluss an den bzgl. seiner Auslegung größeren Tragholm 2 bzw. 2.1 endseitig eine Vertiefung ausgestaltet. Derartige Maßnahmen sind ohne Weiteres möglich, werden in aller Regel jedoch nicht als erforderlich angesehen.

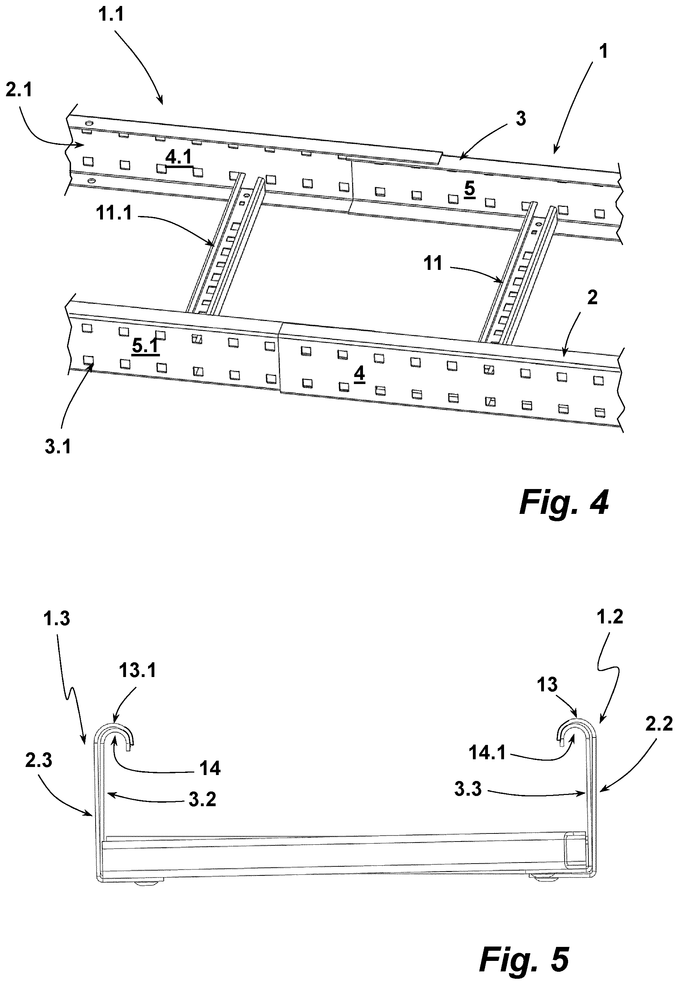

Die überlappende Anordnung der endseitigen Verbindungsabschnitte der beiden Kabeltragsegmente 1, 1.1 ist der perspektivischen Darstellung der miteinander endseitig in Eingriff gestellten Kabeltragsegmente 1, 1.1 der Figur 4 zu entnehmen. Der Überlapp wird vorzugsweise so ausgeführt, dass die in die Holmseitenwände 4, 4.1, 5, 5.1 eingebrachten Durchbrechungen miteinander fluchten. Dann können diese genutzt werden, um die beiden Kabeltragsegmente 1, 1.1 in Richtung ihrer Längserstreckung formschlüssig aneinander zu befestigen bzw. zu fixieren, beispielsweise mittels Schraubbefestigern.

Figur 5 zeigt ein weiteres Ausführungsbeispiel von zwei Kabeltragsegmenten 1.2, 1.3, die prinzipiell aufgebaut sind, wie die vorbeschriebenen Kabeltragsegmente 1, 1.1. Dieses gilt insbesondere für die Tragholme 2.2, 2.3, 3.2, 3.3 der Kabeltragsegmente 1.2, 1.3. Anstelle der zu dem Kabeltragsegment 1 des vorbeschriebenen Ausführungsbeispiels beschriebenen oberen Schenkel 7, 9 verfügen die Tragholme 2.2, 2.3, 3.2, 3.3 oberseitig über ein in Richtung des Kabelaufnahmevolumens hin ausgestelltes Auge 13, 14, 13.1, 14.1. Der bezüglich seiner Auslegung, hier: seiner maßlichen Dimensionierung kleinere Tragholm 3.2, 3.3 ist nicht nur hinsichtlich seiner Höhe kleiner dimensioniert als die diesbezüglich größeren Tragholme 2.2, 2.3, sondern ebenfalls bzgl. seines Auges 14, 14.1 mit einem geringeren Radius ausgeführt, sodass ein bzgl. seiner Auslegung kleinerer Tragholm 14, 14.1 in einen bzgl. seiner Auslegung größeren Tragholm 2.2 bzw. 2.3 in Längsausrichtung des Kabeltragsegmentes 1.2, 1.3 eingeschoben werden kann. Aufgrund der Ausbildung der oberen Struktur der Tragholme 2.2, 2.3 als Auge 13, 14, 13.1, 14.1 können die beiden Kabeltragsegmente 1.2, 1.3 nicht, wie dieses vorstehend zu den Kabeltragsegmenten 1, 1.1 beschrieben worden ist, gegeneinander eingeschwenkt werden. Eine Verbindung der beiden Kabeltragsegmente 1.2, 1.3 erfolgt durch Einschieben des Verbindungsabschnittes eines Kabeltragsegmentes 1.2 oder 1.3 in den komplementären Verbindungsabschnitt des anderen Kabeltragsegmentes 1.3, 1.2. Auf diese Art und Weise können selbstverständlich auch die Kabeltragsegmente 1, 1.1 miteinander verbunden werden.

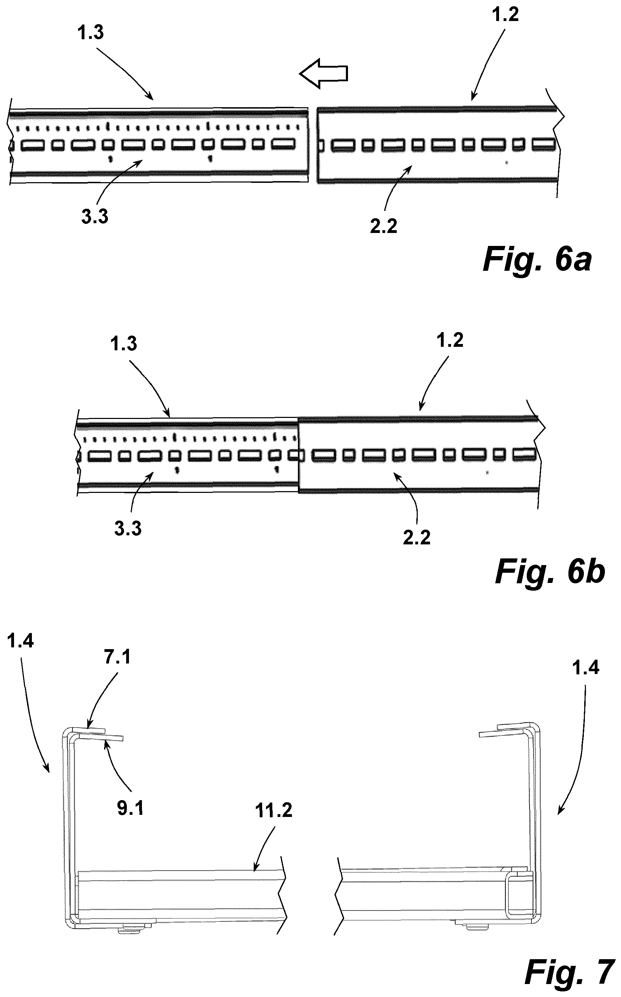

Der diesbezügliche Bewegungsablauf ist in Figuren 6a, 6b gezeigt.

Figur 7 zeigt zwei weitere identische Kabeltragsegmente 1.4, die in derselben Weise durch eine überlappende Anordnung ihrer Verbindungsabschnitte miteinander in Eingriff gestellt sind, wie dieses zu den Kabeltragsegmenten 1, 1.1 beschrieben ist. Die Kabeltragsegmente 1.4 unterscheiden sich von den Kabeltragsegmenten 1, 1.1 allein durch eine Neigung ihrer oberen Schenkel 7.1, 9.1. Im Übrigen gelten die Ausführungen zu den Kabeltragsegmenten 1, 1.1 in gleicher Weise für die Kabeltragsegmente 1.4. Die Schenkel 7.1, 9.1 sind in Richtung zu der Sprosse 11.2 und somit in das Kabelaufnahmevolumen hinein mit einem geringen Winkel geneigt. Dabei sind die Schenkel 7.1, 9.1 der Kabeltragsegmente 1.4 so aufeinander abgestimmt, dass der in der Ineingriffstellung oben liegende Schenkel 9.1 den Scheitel und damit das Höchste des darunter befindlichen Schenkels 7.1 des Tragholms des anderen Kabeltragsegmentes 1.4 übergreift. Auf diese Weise ist eine oberseitige Verklammerung auch in Querrichtung bereitgestellt. Insofern kann der außenliegende Tragholm 9.1 des einen Kabeltragsegmentes 1.4 den bezüglich seiner Auslegung, hier: wiederum seiner Dimensionierung, angepassten Tragholm 7.1 des anderen Kabeltragsegmentes 1.4 einfassen, insbesondere auch mit einer gewissen Vorspannung.

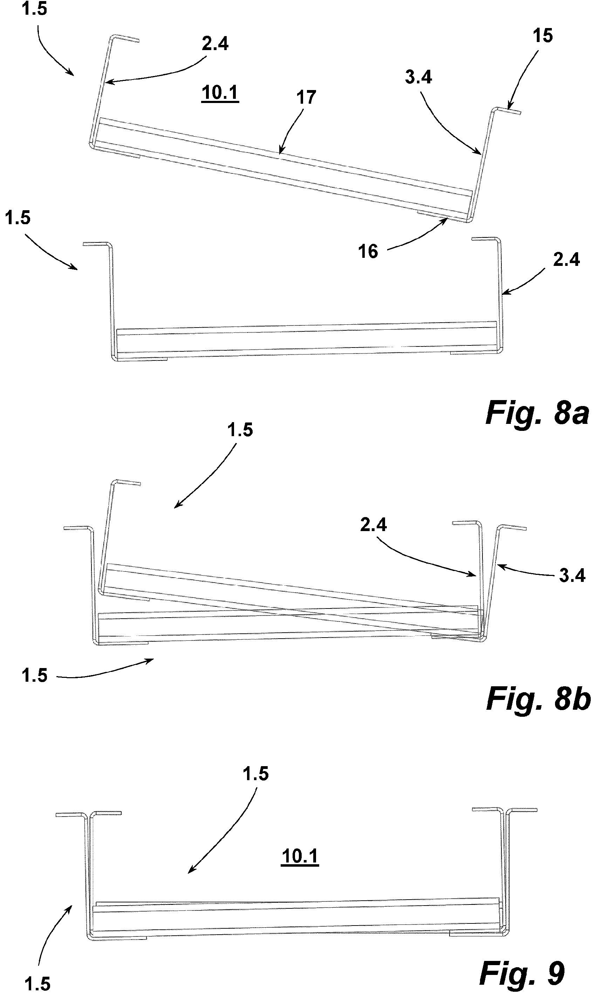

Figur 8a zeigt zwei weitere identische als Kabelleiter ausgebildete Kabeltragsegmente 1.5, wobei das eine Kabeltragsegment 1.5 um die Ebene seines Bodenelementes um 180 Grad gegenüber dem anderen Kabeltragsegment 1.5 gewendet worden ist. Das Kabeltragsegment 1.5 verfügt über einen Tragholm 2.4, der C-förmig profiliert ist. Beide Schenkel des Tragholms 2.4 weisen in die Kabelvolumenaufnahme 10.1 des Kabeltragsegmentes 1.5. Der andere Tragholm 3.4 des Kabeltragsegmentes 1.5 ist Z-förmig profiliert, wobei sein oberer Schenkel 15 nach außen weist, während sein unterer Schenkel 16 die Auflage für das bei diesem Ausführungsbeispiel durch Sprossen 17 gebildete Bodenelement bereitstellt. Bei diesem Ausführungsbeispiel ist die Höhe der beiden Tragholme 2.4, 3.4 gleich. Bei diesem Ausführungsbeispiel resultiert die sich voneinander unterscheidende Auslegung der Tragholme in ihrer unterschiedlichen Geometrie.

Figur 8a zeigt das obere Kabeltragsegment 1.5 in einer gegenüber dem anderen Kabeltragsegment 1.5 geneigten Stellung, um die beiden Kabeltragsegmente 1.5 im Bereich ihrer miteinander in Eingriff zu stellenden Verbindungsabschnitte montieren zu können. Bei der Montage wird der Tragholm 2.4 des unteren Kabeltragsegmentes 1.5 in einem ersten Schritt außenseitig zu dem entsprechend anders ausgelegten Tragholm 3.4 des anderen Kabeltragsegmentes 1.5 angeordnet, wie in Figur 8b gezeigt. Der Tragholm 3.4 des Kabeltragsegmentes 1.5 befindet sich sodann außenseitig bezüglich des Tragholms 2.4 des anderen Kabeltragsegmentes 1.5. Anschließend wird das Kabeltragsegment 1.5 eingeschwenkt, bis beide Verbindungsabschnitte, wie in Figur 9 gezeigt, bestimmungsgemäß miteinander in Eingriff gestellt sind.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten diese umzusetzen, ohne dass dieses im Rahmen dieser Ausführungen im Einzelnen erläutert werden müsste.

### Bezugszeichenliste

- 1, 1.1, 1.2, 1.3, 1.4, 1.5: Kabeltragsegment
- 2, 2.1, 2.2, 2.3, 2.4: Tragholm
- 3, 3.1, 3.2, 3.3, 3.4: Tragholm
- 4, 4.1: Holmseitenwand
- 5, 5.1: Holmseitenwand
- 6: Schenkel
- 7, 7.1: Schenkel
- 8: Schenkel
- 9, 9.1: Schenkel
- 10, 10.1: Kabelaufnahmevolumen
- 11, 11.1, 11.2: Sprosse
- 12: Farbmarkierung
- 13, 13.1: Auge
- 14, 14.1: Auge
- 15: Schenkel
- 16: Schenkel
- 17: Sprosse

## Patentansprüche

1. Kabeltragsegment mit zwei ein Kabelaufnahmevolumen (10) seitlich einfassenden, jeweils eine obere und eine untere, aus der Ebene einer Holmseitenwand (4, 5; 4.1, 5.1) ausgestellte Struktur aufweisenden Tragholmen (2, 3; 2.1, 3.1; 2.2, 3.2; 2.3, 3.3; 2.4, 3.4) und mit zumindest einem die Tragholme (2, 3; 2.1, 3.1; 2.2, 3.2; 2.3, 3.3; 2.4, 3.4) miteinander verbindenden Bodenelement (11, 11.1), wobei die Verbindungsabschnitte von zwei Kabeltragsegmenten (1, 1.1, 1.2, 1.3, 1.4, 1.5) mit einem Überlapp miteinander in Eingriff stellbar sind und wobei der Abstand der Holmseitenwände (4, 5; 4.1, 5.1) eines Kabeltragsegments voneinander in den beiden Verbindungsabschnitten gleich ist, wobei die Auslegung des einen der beiden Tragholme (3, 3.1, 3.2, 3.3, 3.4) in seinen beiden Verbindungsabschnitten zum Verbinden dieses Kabeltragsegmentes (1.1, 1.3, 1.4, 1.5) mit einem weiteren gleichartigen Kabeltragsegment (1, 1.2, 1.4, 1.5) dergestalt zu derjenigen des anderen Tragholms (2, 2.1, 2.2, 2.3, 2.4) in seinen Verbindungsabschnitten eingerichtet ist, sodass der Tragholm (3, 3.1, 3.2, 3.3, 3.4) mit der sich von dem anderen Tragholm (2, 2.1, 2.2, 2.3, 2.4) unterscheidenden Auslegung mit seinen Verbindungsabschnitten mit denjenigen des anderen Tragholms (2, 2.1, 2.2, 2.3, 2.4) einpassen kann, und wobei zumindest ein Endabschnitt des Kabeltragsegmentes (1, 1.1, 1.2, 1.3, 1.4, 1.5) zum Zwecke seiner Nutzung als Verbindungsabschnitt bodenelementfrei oder in Bezug auf sein Bodenelement dergestalt ausgebildet ist, dass der Verbindungsabschnitt eines weiteren, gleichartigen Kabeltragsegmentes (1, 1.1, 1.3, 1.4, 1.5) in einer überlappenden Anordnung an diesen Verbindungsabschnitt anschließbar ist,
**dadurch gekennzeichnet, dass**
die Auslegung und Dimensionierung der beiden Tragholme (2, 3; 2.1, 3.1; 2.2, 3.2; 2.3, 3,3; 2.4, 3.4) über die Länge des Kabeltragsegments (1, 1.1; 1.2, 1.3, 1.4, 1.5) gleich ist, und dass jeder Tragholm (2, 3; 2.1, 3.1; 2.2, 3.2; 2.3, 3.3; 2.4, 3.4) an seinen beiden Enden jeweils einen gleich ausgelegten Verbindungsabschnitt aufweist, jedoch die beiden Tragholme (2, 3; 2.1, 3.1; 2.2, 3.2; 2.3, 3.3; 2.4, 3.4) hinsichtlich der Auslegung ihrer Verbindungsabschnitte unterschiedlich sind.

2. Kabeltragsegment nach Anspruch 1, **dadurch gekennzeichnet, dass** die Tragholme (2, 3; 2.1, 3.1; 2.2, 3.2; 2.3, 3,3; 2.4, 3.4) in dem zumindest einen bodenelementfreien Verbindungsabschnitt der Kabeltragsegmente (1, 1.1, 1.2, 1.3, 1.4, 1.5) als untere, gegenüber der Holmseitenwand (4, 5; 4.1, 5.1) ausgestellte Struktur jeweils einen zu dem anderen Tragholm (2, 3; 2.1, 3.1; 2.2, 3.2; 2.3, 3,3, 2.4, 3.4) weisenden Schenkel (6, 8, 16) aufweisen.

3. Kabeltragsegment nach Anspruch 1, **dadurch gekennzeichnet, dass** die Tragholme in dem zumindest einen bodenelementfreien Verbindungsabschnitt der Kabeltragsegmente als untere, gegenüber der Holmseitenwand ausgestellte Struktur jeweils einen von dem anderen Tragholm wegweisenden Schenkel aufweisen.

4. Kabeltragsegment nach einem der Ansprüche 1 bis 3, **dadurch gekennzeichnet, dass** die Tragholme (2, 3; 2.1, 3.1) als obere, gegenüber der jeweiligen Holmseitenwand (4, 5; 4.1, 5.1) ausgestellte Struktur jeweils einen zu dem jeweils anderen Tragholm (2, 3; 2.1, 3.1; 2.4, 3.4) weisenden Schenkel (7, 9, 15) aufweisen.

5. Kabeltragsegment nach Anspruch 4, **dadurch gekennzeichnet, dass** die jeweils zu dem anderen Tragholm weisenden Schenkel (7.1, 9.1) in Richtung zu dem zumindest einen Bodenelement (11.2) hin mit geringem Winkel geneigt sind, wobei der obenliegende geneigte Schenkel (7.1) den Scheitel des darunter befindlichen Schenkels (9.1) hintergreift.

6. Kabeltragsegment nach einem der Ansprüche 1 bis 5, **dadurch gekennzeichnet, dass** die unterschiedliche Auslegung des einen der beiden Tragholme (3, 3.1) ausschließlich die Dimensionierung der Höhe dieses Tragholmes (3, 3.1) gegenüber derjenigen des anderen Tragholms (2, 2.1) betrifft.

7. Kabeltragsegment nach einem der Ansprüche 1 bis 5, **dadurch gekennzeichnet, dass** die Tragholme (2.2, 3.2; 2.3, 3,3) als obere, gegenüber der Holmseitenwand ausgestellte Struktur jeweils ein nach innen ausgestelltes und in Richtung zum Kabelaufnahmevolumen ausgebildetes rundes Auge (13, 14; 13.1, 14.1) aufweisen.

8. Kabeltragsegment nach Anspruch 7, **dadurch gekennzeichnet, dass** die unterschiedliche Auslegung des einen der beiden Tragholme (3.2, 3.3) seine Höhe und den Radius des runden Auges (14, 14.1) gegenüber den diesbezüglichen Auslegungen des anderen Tragholms (2.2, 2.3) betrifft.

9. Kabeltragsegment nach einem der Ansprüche 6 bis 8, **dadurch gekennzeichnet, dass** der Höhenunterschied zwischen dem die unterschiedliche Auslegung aufweisenden Tragholms (3, 3.1, 3.2, 3.3) gegenüber der Höhe des anderen Tragholms (2, 2.1, 2.2, 2.3) der doppelten Materialstärke entspricht, aus dem die Tragholme (2, 3; 2.1, 3.1; 2.2, 3.2; 2.3, 3,3) hergestellt sind.

10. Kabeltragsegment nach einem der Ansprüche 1 bis 9, **dadurch gekennzeichnet, dass** die Tragholme (2, 3; 2.1, 3.1; 2.2, 3.2; 2.3, 3,3; 2.4, 3.4) über ihre gesamte Länge als untere, gegenüber der Holmseitenwand (4, 5; 4.1, 5.1) ausgestellte Struktur jeweils einen zu dem anderen Tragholm weisenden Schenkel (6, 8, 16) als Auflageschenkel aufweisen, an dem das zumindest eine Bodenelement, beispielsweise ein Bodenblech oder Sprossen (11, 11.1, 11.2, 17) angeschlossen sind.

11. Kabeltragsegment nach Anspruch 10, **dadurch gekennzeichnet, dass** die untere gegenüber der Holmseitenwand ausgestellte Struktur des einen Tragholms in diejenige des anderen Tragholms übergeht und das Bodenelement dieses Kabeltragsegmentes als Bodenblech einstückig mit den Tragholmen hergestellt ist.

12. Anordnung umfassend zwei Kabeltragsegmente (1, 1.1; 1.2, 1.3, 1.4, 1.5) nach einem der Ansprüche 1 bis 11, **dadurch gekennzeichnet, dass** der die gegenüber dem anderen Tragholm (2, 2.1, 2.2, 2.3, 2.4) die unterschiedliche Auslegung aufweisende Tragholm (3, 3.1, 3.2, 3.3) des zweiten Kabeltragsegmentes (1.1, 1.3, 1.4) mit seinem Verbindungsabschnitt in den Verbindungsabschnitt des die diesbezüglich andere Auslegung aufweisenden Tragholms (2, 2.1, 2.2, 2.3) des ersten Kabeltragsegments (1, 1.2, 1.4) und umgekehrt der Tragholm (2, 2.1, 2.2, 2.3) des zweiten Kabeltragsegments (1, 1.1, 1.3, 1.4) mit seinem Verbindungsabschnitt in den Verbindungsabschnitt des die gegenüber diesem Tragholm (2, 2.1, 2.2, 2.3) unterschiedliche Auslegung aufweisenden Tragholm (3, 3.1, 3.2, 3.3) des ersten Kabeltragsegments (1, 1.2, 1.4) in Eingriff gestellt sind, sodass beide Kabeltragsegmente (1, 1.1; 1.2, 1.3, 1.4) mit ihren zueinander weisenden Verbindungsabschnitten überlappend angeordnet sind und der bezüglich seiner Auslegung jeweils unterschiedliche Tragholm (3, 3.1, 3.2, 3.3) jeweils innenliegend ist.

13. Anordnung nach Anspruch 12**,**
**dadurch gekennzeichnet, dass** die überlappend angeordneten Verbindungsabschnitte der beiden Kabeltragsegmente (1, 1.1; 1.2, 1.3, 1.4) durch ein oder mehrere Sicherungselemente, etwa Schrauben aneinander befestigt sind.

14. Anordnung nach Anspruch 13,
**dadurch gekennzeichnet, dass** das oder die Sicherungselemente die jeweils in ihrem Verbindungsabschnitt aneinander liegenden Holmseitenwände (4, 5; 4.1, 5.1) der beiden Kabeltragsegmente (1, 1.1; 1.2, 1.3, 1.4) durchgreifen.

## Claims

1. A cable support segment comprising two support beams (2, 3; 2.1, 3.1; 2.2, 3.2; 2.3, 3.3; 2.4, 3.4) laterally enclosing a cable receiving volume (10), each having an upper and a lower structure projecting from the plane of a beam side wall (4, 5; 4.1, 5.1), and comprising at least one base element (11, 11.1) connecting the support beams (2, 3; 2.1, 3.1; 2.2, 3.2; 2.3, 3.3; 2.4, 3.4) to one another, wherein the connecting sections of two cable support segments (1, 1.1, 1.2, 1.3, 1.4, 1.5) can be brought into engagement with one another with an overlap, and wherein the distance between the beam side walls (4, 5; 4.1, 5.1) of a cable support segment is identical in both connecting sections, wherein the design of the two connecting sections of one of the two support beams (3, 3.1, 3.2, 3.3, 3.4) for connecting said cable support segment (1.1, 1.3, 1.4, 1.5) to another identical cable support segment (1, 1.2, 1.4, 1.5) is designed in such a way compared to that of the connecting sections of the other support beam (2, 2.1, 2.2, 2.3, 2.4) that the support beam (3, 3.1, 3.2, 3.3, 3.4) with the connecting section design that differs from that of the other support beam (2, 2.1, 2.2, 2.3, 2.4) can fit into those of the other support beam (2, 2.1, 2.2, 2.3, 2.4), and wherein at least one end section of the cable support segment (1, 1.1, 1.2, 1.3, 1.4, 1.5) is designed to be free of a base element for the purpose of its use as a connecting section or is designed with respect to its base element such that the connecting section of another, identical cable support segment (1, 1.1, 1.3, 1.4, 1.5) can be connected to said connecting section in an overlapping arrangement, **characterized in that** the design and dimensioning of the two support beams (2, 3; 2.1, 3.1; 2.2, 3.2; 2.3, 3.3; 2.4, 3.4) are the same over the length of the cable support segment (1, 1.1; 1.2, 1.3, 1.4, 1.5), and **in that** each support beam (2, 3; 2.1, 3.1; 2.2, 3.2; 2.3, 3.3; 2.4, 3.4) has an identically designed connecting section at each of its two ends, but the two supporting beams (2, 3; 2.1, 3.1; 2.2, 3.2; 2.3, 3.3; 2.4, 3.4) differ with respect to the design of their connecting sections.

2. The cable support segment of claim 1, **characterized in that** the support beams (2, 3; 2.1, 3.1; 2.2, 3.2; 2.3, 3.3; 2.4, 3.4) in the at least one base element-free connecting section of the cable support segments (1, 1.1, 1.2, 1.3, 1.4, 1.5) each have a leg (6, 8, 16) pointing towards the other support beam (2, 3; 2.1, 3.1; 2.2, 3.2; 2.3, 3.3, 2.4, 3.4) as a lower structure projecting outwards from the beam side wall (4, 5; 4.1, 5.1).

3. The cable support segment of claim 1, **characterized in that** the support beams in the at least one base element-free connecting section of the cable support segments each have a leg pointing away from the other support beam as a lower structure projecting outwards from the beam side wall.

4. The cable support segment of any one of claims 1 to 3, **characterized in that** the support beams (2, 3; 2.1, 3.1) each have a leg (7, 9, 15) pointing towards the other support beam (2, 3; 2.1, 3.1; 2.4, 3.4) as an upper structure projecting relative to the respective beam side wall (4, 5; 4.1, 5.1).

5. The cable support segment of claim 4, **characterized in that** the legs (7.1, 9.1) each pointing towards the other support beam are inclined at a slight angle in the direction of the at least one base element (11.2), wherein the upper inclined leg (7.1) engages behind the apex of the leg (9.1) underneath.

6. The cable support segment of any one of claims 1 to 5, **characterized in that** the different design of one of the two support beams (3, 3.1) is exclusively related to the dimensioning of the height of said support beam (3, 3.1) compared to that of the other support beam (2, 2.1).

7. The cable support segment of any one of claims 1 to 5, **characterized in that** the support beams (2.2, 3.2; 2.3, 3.3) each have, as an upper structure projecting relative to the beam side wall, a round eye (13, 14; 13.1, 14.1) projecting inwards and formed in the direction towards the cable receiving volume.

8. The cable support segment of claim 7, **characterized in that** the different design of one of the two support beams (3.2, 3.3) is related to its height and the radius of the round eye (14, 14.1) compared to the relevant designs of the other support beam (2.2, 2.3).

9. The cable support segment of any one of claims 6 to 8, **characterized in that** the height difference between the support beam (3, 3.1, 3.2, 3.3) having the different design compared to the height of the other support beam (2, 2.1, 2.2, 2.3) corresponds to twice the thickness of the material from which the support beams (2, 3; 2.1, 3.1; 2.2, 3.2; 2.3, 3.3) are made.

10. Cable support segment of any one of claims 1 to 9, **characterized in that** the support beams (2, 3; 2.1, 3.1; 2.2, 3.2; 2.3, 3.3; 2.4, 3.4) each have, over their entire length as a lower structure projecting from the beam side wall (4, 5; 4.1, 5.1), a leg (6, 8, 16) pointing towards the other support beam as a support leg, to which the at least one base element, for example a base plate or rungs (11, 11.1, 11.2, 17) are connected.

11. The cable support segment of claim 10, **characterized in that** the lower structure of one support beam, which projects relative to the beam side wall, merges into that of the other support beam, and the base element of this cable support segment is made as a base plate in one piece with the support beams.

12. An arrangement comprising two cable support segments (1, 1.1; 1.2, 1.3, 1.4, 1.5) of any one of claims 1 to 11, **characterized in that** the connecting section of the support beam (3, 3.1, 3.2, 3.3) of the second cable support segment (1.1, 1.3, 1.4) which has a different design than the other support beam (2, 2.1, 2.2, 2.3, 2.4) is in engagement with the connecting section of the support beam (2, 2.1, 2.2, 2.3) of the first cable support segment (1, 1.2, 1.4) which has a different design in this respect, and conversely the connecting section of the support beam (2, 2.1, 2.2, 2.3) of the second cable support segment (1, 1.1, 1.3, 1.4) is in engagement with the connecting section of the support beam (3, 3.1, 3.2, 3.3) of the first cable support segment (1, 1.2, 1.4) which has a different design than this support beam (2, 2.1, 2.2, 2.3), such that both cable support segments (1, 1.1; 1.2, 1.3, 1.4) are arranged in an overlapping manner with their connecting sections facing each other and the support beam (3, 3.1, 3.2, 3.3) which differs in terms of its design is in each case located on the inside.

13. The arrangement of claim 12, **characterized in that** the overlapping connecting sections of the two cable support segments (1, 1.1; 1.2, 1.3, 1.4) are fastened to one another by one or more securing elements, such as screws.

14. The arrangement of claim 13, **characterized in that** the securing element(s) pass through the respective side walls (4, 5; 4.1, 5.1) of the two cable support segments (1, 1.1; 1.2, 1.3, 1.4) abutting one another in their connecting sections.

## Revendications

1. Segment de support de câble avec deux poutres de support (2, 3 ; 2.1, 3.1 ; 2.2, 3.2 ; 2.3, 3.3 ; 2.4, 3.4) entourant latéralement un volume de réception de câble (10), chacune présentant une structure supérieure et une structure inférieure faisant saillie depuis le plan d'une paroi latérale de poutre (4, 5 ; 4.1, 5.1) et avec au moins un élément de plancher (11, 11.1) reliant les poutres de support (2, 3 ; 2.1, 3.1 ; 2.2, 3.2 ; 2.3, 3.3 ; 2.4, 3.4) entre elles, dans lequel les sections de connexion de deux segments de support de câble (1, 1.1, 1.2, 1.3, 1.4, 1.5) peuvent être mises en prise l'une dans l'autre avec chevauchement, et dans lequel la distance entre les parois latérales de poutre (4, 5 ; 4.1, 5.1) d'un segment de support de câble est identique dans ses deux sections de connexion, dans lequel la conception de l'une des deux poutres de support (3, 3.1, 3.2, 3.3, 3.4) dans ses deux sections de connexion pour la connexion de ce segment de support de câble (1.1, 1.3, 1.4, 1.5) à un autre segment de support de câble similaire (1, 1.2, 1.4, 1.5) est agencée à celle de l'autre poutre de support (2, 2.1, 2.2, 2.3, 2.4) dans ses sections de connexion, de sorte que la poutre de support (3, 3.1, 3.2, 3.3, 3.4) avec la conception différente de l'autre poutre de support (2, 2.1, 2.2, 2.3, 2.4) peut s'adapter avec ses sections de connexion avec celles de l'autre poutre de support (2, 2.1, 2.2, 2.3, 2.4), et dans lequel au moins une section d'extrémité du segment de support de câble (1, 1.1, 1.2, 1.3, 1.4, 1.5) est conçue à des fins d'utilisation comme section de connexion sans élément de plancher ou par rapport à son élément de plancher de sorte que la section de connexion d'un autre segment de support de câble similaire (1, 1.1, 1.3, 1.4, 1.5) peut être connectée à cette section de connexion dans un agencement de chevauchement, **caractérisé en ce que** la conception et le dimensionnement des deux poutres de support (2, 3 ; 2.1, 3.1 ; 2.2, 3.2 ; 2.3, 3.3 ; 2.4, 3.4) sont les mêmes sur toute la longueur du segment de support de câble (1, 1.1 ; 1.2, 1.3, 1.4, 1.5), et **en ce que** chaque poutre de support (2, 3 ; 2.1, 3.1 ; 2.2, 3.2 ; 2.3, 3.3 ; 2.4, 3.4) présente une section de connexion conçue de manière identique à ses deux extrémités, mais les deux poutres de support (2, 3 ; 2.1, 3.1 ; 2.2, 3.2 ; 2.3, 3.3 ; 2.4, 3.4) sont différentes en ce qui concerne la conception de leurs sections de connexion.

2. Segment de support de câble selon la revendication 1, **caractérisé en ce que** les poutres de support (2, 3 ; 2.1, 3.1 ; 2.2, 3.2 ; 2.3, 3.3 ; 2.4, 3.4) dans l'au moins une section de connexion sans élément de plancher des segments de support de câble (1, 1.1, 1.2, 1.3, 1.4, 1.5) présentent chacune une branche (6, 8, 16) dirigée vers l'autre poutre de support (2, 3 ; 2.1, 3.1 ; 2.2, 3.2 ; 2.3, 3,3, 2.4, 3.4) en tant que structure inférieure faisant saillie face à la paroi latérale de poutre (4, 5 ; 4.1, 5.1).

3. Segment de support de câble selon la revendication 1, **caractérisé en ce que** les poutres de support dans l'au moins une section de connexion sans élément de plancher des segments de support de câble présentent chacune une branche dirigée à l'opposé de l'autre poutre de support en tant que structure inférieure faisant saillie face à la paroi latérale de poutre.

4. Segment de support de câble selon l'une des revendications 1 à 3, **caractérisé en ce que** les poutres de support (2, 3 ; 2.1, 3.1) présentent chacune une branche (7, 9, 15) dirigée vers l'autre poutre de support (2, 3 ; 2.1, 3.1 ; 2.4, 3.4) respective en tant que structure supérieure faisant saillie face à la paroi latérale de poutre respective (4, 5 ; 4.1, 5.1).

5. Segment de support de câble selon la revendication 4, **caractérisé en ce que** les branches (7.1, 9.1) dirigées chacune vers l'autre poutre de support sont inclinées d'un léger angle en direction de l'au moins un élément de plancher (11.2), dans lequel la branche inclinée supérieure (7.1) vient en prise derrière le sommet de la branche (9.1) située en dessous.

6. Segment de support de câble selon l'une des revendications 1 à 5, **caractérisé en ce que** la conception différente de l'une des deux poutres de support (3, 3.1) concerne exclusivement le dimensionnement de la hauteur de cette poutre de support (3, 3.1) par rapport à celui de l'autre poutre de support (2, 2.1).

7. Segment de support de câble selon l'une des revendications 1 à 5, **caractérisé en ce que** les poutres de support (2.2, 3.2 ; 2.3, 3.3) présentent chacune, en tant que structure supérieure faisant saillie face à la paroi latérale de poutre, un œil rond (13, 14 ; 13.1, 14.1) faisant saillie vers l'intérieur et formé en direction du volume de réception de câble.

8. Segment de support de câble selon la revendication 7, **caractérisé en ce que** la conception différente de l'une des deux poutres de support (3.2, 3.3) concerne sa hauteur et le rayon de l'œil rond (14, 14.1) par rapport aux conceptions correspondantes de l'autre poutre de support (2.2, 2.3).

9. Segment de support de câble selon l'une des revendications 6 à 8, **caractérisé en ce que** la différence de hauteur entre la poutre de support (3, 3.1, 3.2, 3.3) présentant la conception différente par rapport à la hauteur de l'autre poutre de support (2, 2.1, 2.2, 2.3) correspond au double de l'épaisseur du matériau à partir duquel les poutres de support (2, 3 ; 2.1, 3.1 ; 2.2, 3.2 ; 2.3, 3.3) sont réalisées.

10. Segment de support de câble selon l'une des revendications 1 à 9, **caractérisé en ce que** les poutres de support (2, 3 ; 2.1, 3.1 ; 2.2, 3.2 ; 2.3, 3.3 ; 2.4, 3.4) présentent chacune, sur toute leur longueur, en tant que structure inférieure faisant saillie face à la paroi latérale de poutre (4, 5 ; 4.1, 5.1), une branche (6, 8, 16) dirigée vers l'autre poutre de support en tant que branche de support, à laquelle sont reliés l'au moins un élément de plancher, par exemple une plaque de plancher ou des échelons (11, 11.1, 11.2, 17).

11. Segment de support de câble selon la revendication 10, **caractérisé en ce que** la structure inférieure d'une poutre de support faisant saillie face à la paroi latérale de la poutre se fond dans celle de l'autre poutre de support et l'élément de plancher de ce segment de support de câble est fabriqué en une seule pièce avec les poutres de support sous forme de plaque de plancher.

12. Agencement comprenant deux segments de support de câble (1, 1.1 ; 1.2, 1.3, 1.4, 1.5) selon l'une des revendications 1 à 11, **caractérisé en ce que** la poutre de support (3, 3.1, 3.2, 3.3) du second segment de support de câble (1.1, 1.3, 1.4) présentant une conception différente de l'autre poutre de support (2, 2.1, 2.2, 2.3, 2.4) est en prise avec sa section de connexion dans la section de connexion de la poutre de support (2, 2.1, 2.2, 2.3) du premier segment de support de câble (1, 1.2, 1.4) présentant une conception différente à cet égard, et inversement, la poutre de support (2, 2.1, 2.2, 2.3) du second segment de support de câble (1, 1.1, 1.3, 1.4) est en prise avec sa section de connexion dans la section de connexion de la poutre de support (3, 3.1, 3.2, 3.3) du premier segment de support de câble (1, 1.2, 1.4) présentant une conception différente de cette poutre de support (2, 2.1, 2.2, 2.3), de sorte que les deux segments de support de câble (1, 1.1 ; 1.2, 1.3, 1.4) sont disposés de manière à se chevaucher avec leurs sections de connexion dirigées l'une vers l'autre et que la poutre de support (3, 3.1, 3.2, 3.3), qui diffère en termes de conception, est dans chaque cas située à l'intérieur.

13. Agencement selon la revendication 12, **caractérisé en ce que** les sections de connexion se chevauchant des deux segments de support de câble (1, 1.1 ; 1.2, 1.3, 1.4) sont fixées l'une à l'autre par un ou plusieurs éléments de fixation, tels que des vis.

14. Agencement selon la revendication 13, **caractérisé en ce que** le ou les éléments de fixation traversent les parois latérales de poutre respectives (4, 5 ; 4.1, 5.1) des deux segments de support de câble (1, 1.1 ; 1.2, 1.3, 1.4) se trouvant l'un contre l'autre dans leur section de connexion.
